# EUROPEAN PATENT APPLICATION

(11) **EP 4 644 191 A2**
(43) Date of publication of application: **05.11.2025**
(21) Application number: 25170162.9
(22) Date of filing: 11.04.2025
(51) Int. Cl.: B60S 1/38

(54) **REUSABLE WIPER BLADE ASSEMBLY**

(30) Priority: 01.05.2024 US 202463641178 P; 07.03.2025 US 202519073439
(71) Applicant: Illinois Tool Works Inc., Glenview IL 60025 (US)
(72) Inventor: ROSAS, Martin William, Glenview, 60025 (US)
(74) Representative: HGF

(57) **Abstract**

Described is a wiper blade assembly for a windshield of a vehicle. The wiper blade assembly includes a spoiler, an elastomeric element, and a wiper blade spline. The elastomeric element is removeably coupled to the spoiler via the wiper blade spline. The elastomeric element can attach to the wiper blade spline in one of a first orientation and a second orientation. The elastomeric element includes a first blade having a first profile and a second blade having a second profile. The elastomeric element can further include a third blade having a third profile. The first blade, the second blade, and the third blade can be positioned 120 degrees about a longitudinal axis of the elastomeric element.

## Description

The present application claims priority to United States Provisional Patent Application No. 63/641,178, filed May 1, 2024, and entitled "Reusable Wiper Blade Assembly," which is hereby incorporated by reference in its entirety.

### BACKGROUND

Windshield wipers are utilized to remove rain, snow, ice, washer fluid, water, and/or other debris from a vehicle's front or rear windshield. Nearly all vehicles, including cars, trucks, buses, train locomotives, watercraft (e.g., those with a cabin), and even some aircraft, are equipped with one or more windshield wipers. In numerous jurisdictions, windshield wipers are a legal requirement.

Replacing wiper blades as they degrade or wear out is critical for several reasons. Firstly, worn-out blades can leave streaks or smudges on the windshield, reducing visibility and potentially hindering the driver's ability to see obstacles, other vehicles, or pedestrians, especially in adverse weather conditions. Secondly, the rubber material of the wiper blade can deteriorate over time, leading to decreased flexibility and effectiveness in clearing the windshield. This inefficiency can result in dirty areas remaining, obstructing the driver's view. Moreover, degraded wiper blades may generate noise or skip across the windshield, distracting the driver and indicating suboptimal functionality. Lastly, worn-out wiper blades can harm the windshield itself by trapping dirt and debris between the blade and the glass, resulting in scratches or etches over time and necessitating costly repairs or windshield replacement.

Therefore, regular inspection and timely replacement of wiper blades help ensure optimal visibility and driving safety. Despite advancements to date, there is a need for a wiper blade assembly that can be effectively refilled and reused, enabling the operator to replace or address only the worn wiper blade while reusing the rest of the wiper blade assembly.

### SUMMARY

The present disclosure relates generally to a refillable wiper blade assembly, substantially as illustrated by and described in connection with at least one of the figures, as set forth more completely in the claims. More specifically, the present disclosure relates to a refillable wiper blade assembly that includes an elastomeric element having multiple blades with various wiping surface profiles.

### DRAWINGS

The foregoing and other objects, features, and advantages of the devices, systems, and methods described herein will be apparent from the following description of particular examples thereof, as illustrated in the accompanying figures; where like or similar reference numbers refer to like or similar structures. The figures are not necessarily to scale, emphasis instead being placed upon illustrating the principles of the devices, systems, and methods described herein.
Figure 1a illustrates an example of a vehicle having a windshield and a pair of wiper blades.
Figure 1b illustrates an assembly view of an example connection point between the wiper blade and the wiper arm.
Figures 2a and 2b illustrate, respectively, assembled and assembly isometric views of a wiper blade assembly in accordance with an aspect of this disclosure.
Figures 2c and 2d illustrate, respectively, assembled and assembly cross sectional views of the wiper blade taken across cut lines A-A (Figure 2a) and B-B (Figure 2b).
Figure 3a illustrates an isometric view of an elastomeric element in accordance with an aspect of this disclosure.
Figure 3b illustrates an enlarged isometric view of the elastomeric element of Figure 3a.
Figure 3c illustrates a profile view of the elastomeric element of Figure 3a.
Figure 4a illustrates an isometric view of an elastomeric element in accordance with another aspect of this disclosure.
Figure 4b illustrates an enlarged isometric view of the elastomeric element of Figure 4a.
Figure 4c illustrates a profile view of the elastomeric element of Figure 4a.

### DESCRIPTION

References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context. Recitation of ranges of values herein are not intended to be limiting, referring instead individually to any and all values falling within and/or including the range, unless otherwise indicated herein, and each separate value within such a range is incorporated into the specification as if it were individually recited herein. In the following description, it is understood that terms such as "first," "second," "top," "bottom," "side," "front," "back," and the like are words of convenience and are not to be construed as limiting terms. For example, while in some examples a first side is located adjacent or near a second side, the terms "first side" and "second side" do not imply any specific order in which the sides are ordered.

The terms "about," "approximately," "substantially," or the like, when accompanying a numerical value, are to be construed as indicating a deviation as would be appreciated by one of ordinary skill in the art to operate satisfactorily for an intended purpose. Ranges of values and/or numeric values are provided herein as examples only, and do not constitute a limitation on the scope of the disclosure. The use of any and all examples, or exemplary language ("e.g.," "such as," or the like) provided herein, is intended merely to better illuminate the disclosed examples, and does not pose a limitation on the scope of the disclosure. The terms "e.g.," and "for example" set off lists of one or more non-limiting examples, instances, or illustrations. No language in the specification should be construed as indicating any unclaimed element as essential to the practice of the disclosed examples.

The term "and/or" means any one or more of the items in the list joined by "and/or." As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y, and z."

Wiper blades used in vehicles vary in size and shape. In some cases, wiper blades can be the same shape, but will vary in size. The present disclosure relates to a windshield wiper blade assembly having an elastomeric element configured with multiple wiping surfaces to provide a refillable and/or reusable wiper blade assembly. A typical windshield wiper blade is recommended to be replaced every 8 to 12 months due to the wear of the elastomeric element, also referred to as the rubber squeegee. Many of the components of the wiper blade do not need to be replaced as frequently. The disclosed windshield wiper blade assembly allows for the consumable portion of the wiper blade (i.e., the elastomeric element) to be replaced without the need to purchase a blade refill.

The disclosed windshield wiper blade assembly includes an elastomeric element that is designed with two or more wiping surfaces that can be interchanged when one surface is worn and no longer effective. When it is time to replace the wiper blade, the consumer can remove the elastomeric element, rotate the elastomeric element to reveal a fresh wiping surface, and re-install the elastomeric element. Thus, renewing the wiper blade assembly and extending the effective service period. This concept also ensures that the replacement elastomeric element is designed to fit and perform with the wiper blade assembly as originally designed.

While wiper blades are most often associated with automobiles (e.g., cars, trucks, etc.), they are likewise employed in numerous other vehicles, such as trains, watercraft, and aircraft. Therefore, the following disclosure should not be limited to wiper blades and wiper arms used in automobiles, but rather would be applicable to wiper blades and wiper arms used in any type of vehicle.

In one example, a wiper blade assembly for a windshield of a vehicle comprises: a spoiler; and an elastomeric element configured to couple removeably with the spoiler in one of a plurality of orientations, wherein the elastomeric element comprises a first blade having a first profile and a second blade having a second profile.

In another example, a wiper blade assembly for a windshield of a vehicle comprises: a spoiler having a wiper blade spline; and an elastomeric element removeably coupled to the spoiler via the wiper blade spline, wherein the elastomeric element is configured to attach to the wiper blade spline in one of a first orientation and a second orientation, and wherein the elastomeric element comprises a first blade having a first profile and a second blade having a second profile.

In yet another example, an elastomeric element for a wiper blade assembly having a spoiler and a wiper blade spline comprises: a first blade having a first profile; and a second blade having a second profile, wherein the first blade is coupled to the second blade via a mating feature, and wherein the first blade is oriented away from the second blade. In some examples, the first profile and the second profile are different. The first blade can be formed from a first material and the second blade is formed from a second material that is different from the first material. The elastomeric element can further comprise a third blade having a third profile, and wherein the first blade, the second blade, and the third blade are positioned 120 degrees about a longitudinal axis of the elastomeric element.

In some examples, the first profile and the second profile are the same.

In some examples, the first profile and the second profile are different.

In some examples, the first blade is formed from a first material and the second blade is formed from a second material that is different from the first material.

In some examples, the first blade and the second blade are formed from the same material.

In some examples, the first blade and the second blade are positioned 180 degrees about a longitudinal axis of the elastomeric element.

In some examples, the elastomeric element further comprises a third blade having a third profile. The first blade, the second blade, and the third blade can be positioned 120 degrees about a longitudinal axis of the elastomeric element.

In some examples, the elastomeric element is removeably coupled to the spoiler via a wiper blade spline.

In some examples, the wiper blade spline defines a slot along its longitudinal length that is configured to receive at least a portion of the elastomeric element.

In some examples, the first blade and the second blade are joined to one another via a mating feature, and wherein the slot is configured to receive the mating feature.

In some examples, the first blade is less rigid than the second blade.

In some examples, at least one of the first blade and the second blade comprises a hard coating.

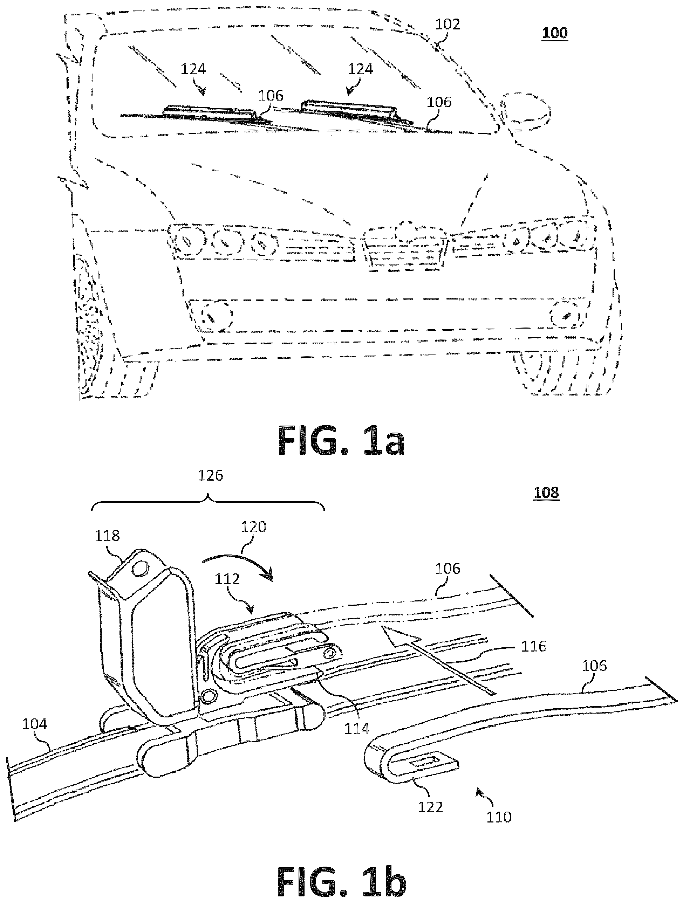

Figure 1a depicts an example vehicle 100 with a windshield 102 and two wiper blade assemblies 124. Each wiper blade assembly 124 is detachably connected to a wiper arm 106 of the vehicle 100 at a coupling 108; an example of which is illustrated in Figure 1b. As is known in the art, the wiper arms 106 (and, therefore, the wiper blade assemblies 124) are configured to translate back and forth across the windshield 102 during operation to clear the windshield 102 of rain, snow, and debris via one or more electric motors and mechanical linkages associated with the vehicle 100. Figure 1b provides an assembly view of a coupling 108 between the wiper blade assembly 124 and the wiper arm 106. In this instance, the wiper blade assembly 124 comprises a wiper blade structure 104 and an adapter assembly 126 configured to connect with the wiper arm 106.

Each wiper arm 106 features, at its far end (e.g., distal end), an arm-side connector 110. The arm-side connector 110 is configured to engage and secure the wiper blade structure 104 via a complementary blade-side connector 112 situated on or associated with the adapter assembly 126 of the wiper blade structure 104. For example, the illustrated blade-side connector 112 includes a slot 114 configured to receive the arm-side connector 110 and a locking cap 118. During assembly, the arm-side connector 110 is inserted into the slot 114 (depicted as a J-shaped slot) of the blade-side connector 112, as shown by arrow 116. Once connected, the locking cap 118 can be folded and closed, as indicated by arrow 120 (e.g., pivoted about a hinge), to cover, secure, and safeguard the joined arm-side connector 110 and blade-side connector 112.

In the illustrated example, the wiper arm 106 includes an arm-side connector 110 configured as a J-Hook connector 122, but other connector types are contemplated. That is, wiper arms 106 come in several types to suit different vehicle designs. A common type of wiper arm is the standard hook arm, which features a hook-shaped end to hold the wiper blade securely. Other examples include bayonet arms, which have a straight-end connection mechanism with a locking tab or button for blade attachment, and pinch tab arms, which require pinching a tab to release the blade. Additional examples include side pin arms, which utilize a pin protruding from the side of the arm that fits into a corresponding hole on the blade, and screw-on arms, which use a screw mechanism for secure attachment.

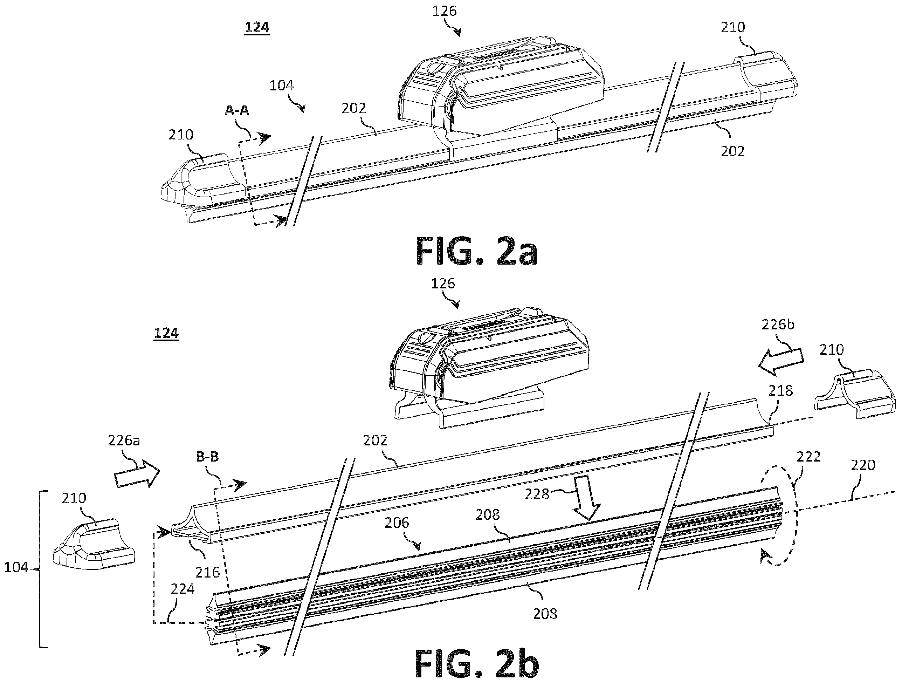

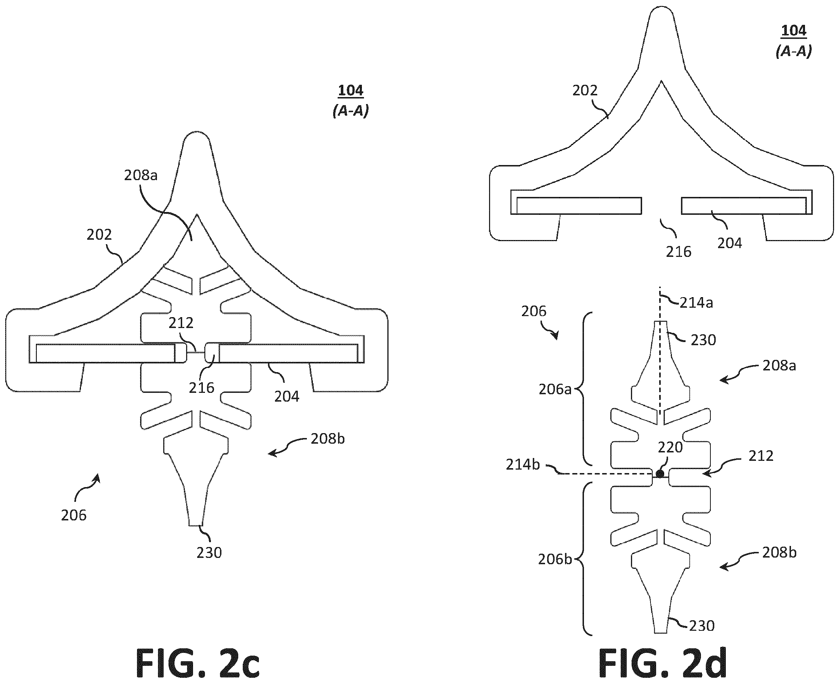

Figures 2a and 2b illustrate, respectively, assembled and assembly isometric views of a wiper blade assembly 124. As illustrated, the wiper blade assembly 124 comprises the wiper blade structure 104 and the adapter assembly 126, which may be pivotally mounted relative to the wiper blade structure 104. Figures 2c and 2d illustrate, respectively, assembled and assembly cross sectional views of the wiper blade structure 104 taken across cut lines A-A (Figure 2a) and B-B (Figure 2b).

The wiper blade structure 104 generally comprises a spoiler 202, a wiper blade spline 204, a set of end caps 210, and an elastomeric element 206 (sometimes called a squeegee) that defines one or more blades 208. The spoiler 202 is configured to couple with the elastomeric element 206 via the wiper blade spline 204 and to the wiper arm 106 via the adapter assembly 126. For example, the elastomeric element 206 can removeably be coupled to the spoiler 202 via the wiper blade spline 204. One or more parts of the adapter assembly 126 may be integral with the spoiler 202 or attached thereto via one or more clips, snaps, fasteners, adhesives, etc. The set of end caps 210 are configured such that an end cap 210 is provided at each end of the spoiler 202 to retain the elastomeric element 206. For example, the end caps 210 can be configured with a cap attachment feature to disengage the end cap 210 for removal. The cap attachment feature can be, for example, one or more clips, snaps, fasteners, an interference fit, etc.

The elastomeric element 206 comprises a plurality of blades 208, each of the plurality of blades 208 defining a wiping surface 230 to contact the windshield 102. Providing an elastomeric element 206 with a plurality of blades 208 allows for reusability of the wiper blade assembly 124, thus mitigating waste and cost. In the illustrated example, the elastomeric element 206 comprises a first blade 208a having a first profile 206a and a second blade 208b having a second profile 206b. The first blade 208a and the second blade 208b are oriented away from one another.

The first blade 208a and the second blade 208b are joined to one another via a mating feature 212 (illustrated as a neck or stem portion). As illustrated, the first blade 208a and the second blade 208b are positioned at different positioned about the longitudinal axis 220. In this example, the first blade 208a and the second blade 208b are oriented in opposed directions such that the first blade 208a and the second blade 208b are positioned 180 degrees about the longitudinal axis 220 of the elastomeric element 206. In this example, the first profile 206a and the second profile 206b are the same or identical, such that they are symmetrical relative to the first reference plane 214a (illustrated as a vertical plane) and second reference plane 214b (illustrated as a horizontal plane). As will be discussed, however, the first profile 206a and the second profile 206b can be different (e.g., asymmetrical relative to the first reference plane 214a and/or second reference plane 214b).

In some examples, the first blade 208a and the second blade 208b can be made of the same material to provide a similar performance or, where desired, different materials to provide different performance or benefits based on, for example, environmental conditions or other situations. For example, one of the first blade 208a and the second blade 208b can be made from a material that is more suitable for winter conditions (e.g., lower temperatures, snow, and ice), while the other can be made from a material that is more suitable for summer conditions (e.g., warmer temperatures and rain). To that end, the material used for the first blade 208a and the second blade 208b can have different densities, rigidity, etc. In some examples, the first blade 208a and/or the second blade 208b can comprise additional structures to help clear debris, such as a brush, a sponge, a scrubbing pad, etc.

The elastomeric element 206 is coupled to the spoiler 202 via, for example, the wiper blade spline 204. The illustrated wiper blade spline 204 defines a slot 216 along its longitudinal length 218 that is configured to receive and secure at least a portion of the elastomeric element 206. For example, the slot 216 can be sized such that the mating feature 212 is positioned within the slot 216 as best illustrated in Figure 2c. As illustrated, the spoiler 202 is configured to store or protect the blade 208 that is not in use (e.g., the first blade 208a, in the illustrated example).

To allow for replacement and/or rotation of the elastomeric element 206, the wiper blade assembly 124 is configured to couple, hold, or otherwise secure the elastomeric element 206 removably in one of multiple orientations. For example, the wiper blade assembly 124 is configured to initially hold the elastomeric element 206 in a first orientation where the first blade 208a is used for an initial performance period and, after a period of time, a second orientation where a second blade 208b is used for a subsequent performance period.

In one example, once the first blade 208a has worn such that it no longer performs as desired, one or both of the end caps 210 can be removed from the spoiler 202. The user can then remove the elastomeric element 206 from the wiper blade assembly 124 by sliding the elastomeric element 206 horizontally out of the wiper blade spline 204. Once removed, the elastomeric element 206 can be rotated about its longitudinal axis 220 as indicated by arrow 222 from the first orientation to a second orientation. In the second orientation, the second blade 208b can then be used for a subsequent performance period. The elastomeric element 206 can then be re-installed into the wiper blade assembly 124 by sliding the elastomeric element 206 back into the wiper blade spline 204 as indicated by arrow 224. The end cap(s) 210 can then be reattached to the spoiler 202 as indicated by arrows 226a, 226b. This process can be repeated for each of the blades 208 for a given elastomeric element 206.

In another example, the elastomeric element 206 can be removed from the spoiler 202 and/or wiper blade spline 204 vertically. The that end, the wiper blade assembly 124 may be configured to disengage the elastomeric element 206 from the wiper blade spline 204 to allow the elastomeric element 206 to pull away from the wiper blade assembly 124 in the direction indicated by arrow 228. For example, the spoiler 202 and/or the wiper blade spline 204 could be flexed to release the elastomeric element 206 from the slot 216. In another example, the elastomeric element 206 can be attached to the spoiler 202 and/or the wiper blade spline 204 via one or more clips, snaps, fasteners, an interference fit, etc. Once removed, the elastomeric element 206 can be rotated about its longitudinal axis 220 as indicated by arrow 222 from the first orientation to a second orientation and re-installed into the wiper blade assembly 124. In yet another example, the wiper blade spline 204 may be removably attached to the spoiler 202 such that the wiper blade spline 204 can be removed with the elastomeric element 206. In this example, the combination of the wiper blade spline 204 and elastomeric element 206 could be removed, rotated, and reinstalled (or reattached to) the spoiler 202.

The wiper blade assembly 124 and components thereof can be made from various materials, including synthetic or semi-synthetic polymers (e.g., plastics, such as acrylonitrile butadiene styrene (ABS) and polyvinyl chloride (PVC), etc.), composite materials (e.g., fiber glass), metal (or a metal alloy), or a combination thereof. For example, certain components of the wiper blade assembly 124 (e.g., the adapter assembly 126, end caps 210, etc.) can be fabricated from a rigid material (e.g., synthetic, or semi-synthetic polymers).

The elastomeric element 206 and/or the spoiler 202 can be fabricated from one or more elastomeric materials. Example elastomeric materials include, without limitation, thermoplastic polyurethane (TPU), thermoplastic vulcanizates (TPV), thermoplastic elastomers (TPE), flexible polyurethane (FPU), silicon, etc. In some examples, a coating may be applied over the elastomeric element 206 to mitigate the effects of the environment, such as debris, UV exposure, etc. An example coating may include a non-stick or hydrophobic coating that mitigates the effects of debris and liquid by easily brushing the debris and liquid away from the elastomeric element 206. In another example, the elastomeric element 206 can be coated with a hard coating to increase durability. The wiper blade spline 204 can be formed from metal, such as spring steel.

Components of the wiper blade assembly 124 can be fabricated via mold tooling and a plastic-injection molding process (*e*.*g*., a two-shot injection process when different materials are used). In another example, components of the wiper blade assembly 124 can be a printed thermoplastic material component that can be printed with great accuracy and with numerous details, which is particularly advantageous, for example, in creating components requiring complex and/or precise features. In some examples, as may be the case with the wiper blade spline 204, the component can be formed via a metal stamping process.

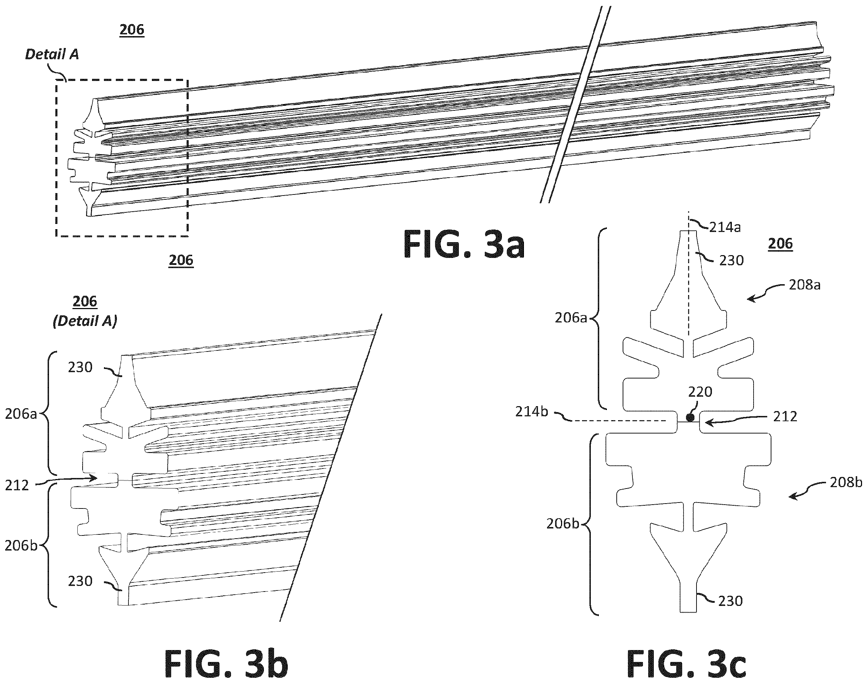

Figure 3a illustrates an isometric view of an elastomeric element 206 in accordance with an aspect of this disclosure, while Figures 3b and 3c illustrate, respectively, an enlarged isometric and side profile views of the elastomeric element 206. As with the example of Figures 2a through 2d, the elastomeric element 206 comprises a first blade 208a having a first profile 206a and a second blade 208b having a second profile 206b. The first blade 208a and the second blade 208b are joined via a mating feature 212. In this example, however, the first profile 206a and the second profile 206b are different.

In this example, the first profile 206a and the second profile 206b are symmetrical relative to the first reference plane 214a (illustrated as a vertical plane), but asymmetrical relative to the second reference plane 214b (illustrated as a horizontal plane). Different profiles can provide different performance or benefits based on environmental conditions or other situations. The first blade 208a and the second blade 208b can be made of the same material to provide a similar performance or, where desired, different materials to provide different performance or benefits based on, for example, environmental conditions or other situations. In some examples, the first blade 208a and/or the second blade 208b can comprise additional structures to help clear debris, such as a brush, a sponge, a scrubbing pad, etc.

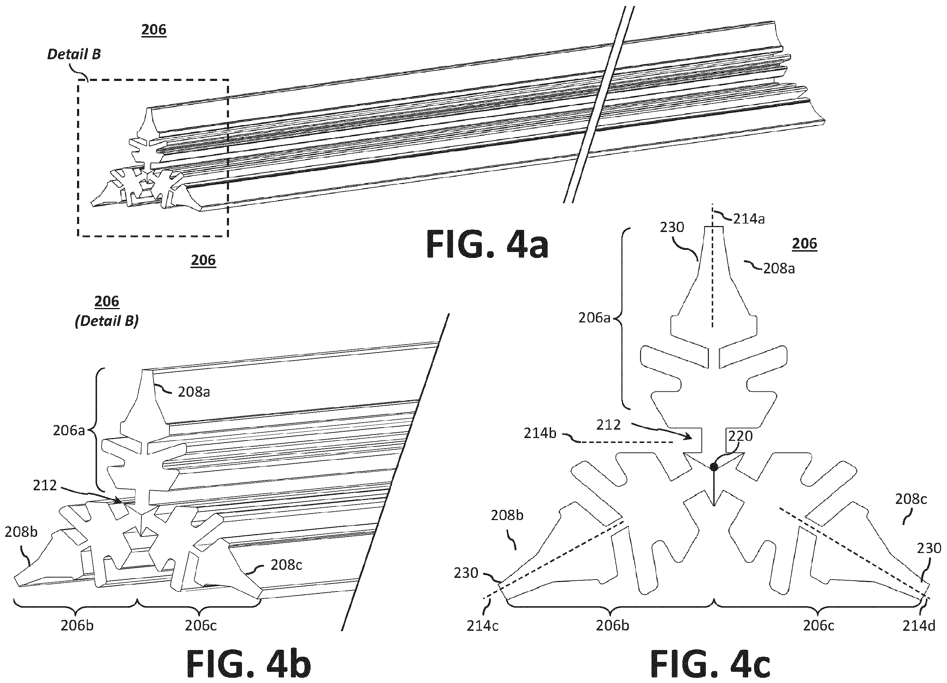

Figure 4a illustrates an isometric view of an elastomeric element 206 in accordance with another aspect of this disclosure, while Figures 4b and 4c illustrate, respectively, an enlarged isometric and side profile views of the elastomeric element 206. The elastomeric element 206 comprises a first blade 208a having a first profile 206a, a second blade 208b having a second profile 206b, and a third blade 208c having a third profile 206c. The first blade 208a, the second blade 208b, and the third blade 208c are joined via a mating feature 212.

In this example, the first profile 206a, the second profile 206b, and the third profile 206c are the same or identical; however different profiles can be used as described, for example, in connection with Figures 3a through 3c. In this example, the first blade 208a, the second blade 208b, and the third blade 208c are oriented radially outwardly such that the first blade 208a, the second blade 208b, and the third blade 208c are positioned 120 degrees about the longitudinal axis 220 of the elastomeric element 206.

As illustrated, each of the first profile 206a, the second profile 206b, and the third profile 206c are symmetrical about its center reference plane (in this example, identified as the first reference plane 214a, third reference plane 214c, and fourth reference plane 214d), but the overall profile of the elastomeric element 206 is asymmetrical relative to the second reference plane 214b (illustrated as a horizontal plane).

As discussed with the prior examples, the first blade 208a, the second blade 208b, and the third blade 208c can be made of the same material to provide a similar performance or, where desired, different materials to provide different performance or benefits based on, for example, environmental conditions or other situations. In some examples, one or more of the first blade 208a, the second blade 208b, and the third blade 208c can comprise additional structures to help clear debris, such as a brush, a sponge, a scrubbing pad, etc.

While the present method and/or system have been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses:
Clause 1. A wiper blade assembly for a windshield of a vehicle, the wiper blade assembly comprising:
   a spoiler; and
   an elastomeric element configured to couple removeably with the spoiler in one of a plurality of orientations,
   wherein the elastomeric element comprises a first blade having a first profile and a second blade having a second profile.
Clause 2. The wiper blade assembly of clause 1, wherein the first profile and the second profile are the same.
Clause 3. The wiper blade assembly of clause 1, wherein the first profile and the second profile are different.
Clause 4. The wiper blade assembly of clause 1, wherein the first blade is formed from a first material and the second blade is formed from a second material that is different from the first material.
Clause 5. The wiper blade assembly of clause 1, wherein the first blade and the second blade are formed from the same material.
Clause 6. The wiper blade assembly of clause 1, wherein the first blade and the second blade are positioned 180 degrees about a longitudinal axis of the elastomeric element.
Clause 7. The wiper blade assembly of clause 1, wherein the elastomeric element further comprises a third blade having a third profile.
Clause 8. The wiper blade assembly of clause 7, wherein the first blade, the second blade, and the third blade are positioned 120 degrees about a longitudinal axis of the elastomeric element.
Clause 9. The wiper blade assembly of clause 1, wherein the elastomeric element is removeably coupled to the spoiler via a wiper blade spline.
Clause 10. The wiper blade assembly of clause 9, wherein the wiper blade spline defines a slot along its longitudinal length that is configured to receive at least a portion of the elastomeric element.
Clause 11. The wiper blade assembly of clause 10, wherein the first blade and the second blade are joined to one another via a mating feature, and wherein the slot is configured to receive the mating feature.
Clause 12. The wiper blade assembly of clause 1, wherein the first blade is less rigid than the second blade.
Clause 13. The wiper blade assembly of clause 1, wherein at least one of the first blade and the second blade comprises a hard coating.
Clause 14. A wiper blade assembly for a windshield of a vehicle, the wiper blade assembly comprising:
   a spoiler having a wiper blade spline; and
   an elastomeric element removeably coupled to the spoiler via the wiper blade spline,
   wherein the elastomeric element is configured to attach to the wiper blade spline in one of a first orientation and a second orientation, and
   wherein the elastomeric element comprises a first blade having a first profile and a second blade having a second profile.
Clause 15. The wiper blade assembly of clause 14, wherein the first profile and the second profile are different.
Clause 16. The wiper blade assembly of clause 14, wherein the first blade is formed from a first material and the second blade is formed from a second material that is different from the first material.
Clause 17. An elastomeric element for a wiper blade assembly having a spoiler and a wiper blade spline, the elastomeric element comprising:
   a first blade having a first profile; and
   a second blade having a second profile,
   wherein the first blade is coupled to the second blade via a mating feature, and wherein the first blade is oriented away from the second blade.
Clause 18. The elastomeric element of clause 17, wherein the first profile and the second profile are different.
Clause 19. The elastomeric element of clause 17, wherein the first blade is formed from a first material and the second blade is formed from a second material that is different from the first material.
Clause 20. The elastomeric element of clause 17, wherein the elastomeric element further comprises a third blade having a third profile, and wherein the first blade, the second blade, and the third blade are positioned 120 degrees about a longitudinal axis of the elastomeric element.

## Claims

1. A wiper blade assembly for a windshield of a vehicle, the wiper blade assembly comprising:
a spoiler; and
an elastomeric element configured to couple removeably with the spoiler in one of a plurality of orientations,
wherein the elastomeric element comprises a first blade having a first profile and a second blade having a second profile.

2. The wiper blade assembly of claim 1, wherein the first profile and the second profile are the same, or
wherein the first profile and the second profile are different.

3. The wiper blade assembly of claim 1 or claim 2, wherein the first blade is formed from a first material and the second blade is formed from a second material that is different from the first material, or
wherein the first blade and the second blade are formed from the same material.

4. The wiper blade assembly of any one of claims 1 to 3, wherein the first blade and the second blade are positioned 180 degrees about a longitudinal axis of the elastomeric element.

5. The wiper blade assembly of any one of claims 1 to 3, wherein the elastomeric element further comprises a third blade having a third profile, and optionally
wherein the first blade, the second blade, and the third blade are positioned 120 degrees about a longitudinal axis of the elastomeric element.

6. The wiper blade assembly of any one of claims 1 to 5, wherein the elastomeric element is removeably coupled to the spoiler via a wiper blade spline.

7. The wiper blade assembly of claim 6, wherein the wiper blade spline defines a slot along its longitudinal length that is configured to receive at least a portion of the elastomeric element, and optionally
wherein the first blade and the second blade are joined to one another via a mating feature, and wherein the slot is configured to receive the mating feature.

8. The wiper blade assembly of any one of claims 1 to 7, wherein the first blade is less rigid than the second blade, and/or
wherein at least one of the first blade and the second blade comprises a hard coating.

9. A wiper blade assembly for a windshield of a vehicle, the wiper blade assembly comprising:
a spoiler having a wiper blade spline; and
an elastomeric element removeably coupled to the spoiler via the wiper blade spline,
wherein the elastomeric element is configured to attach to the wiper blade spline in one of a first orientation and a second orientation, and
wherein the elastomeric element comprises a first blade having a first profile and a second blade having a second profile.

10. The wiper blade assembly of claim 9, wherein the first profile and the second profile are different.

11. The wiper blade assembly of claim 9 or claim 10, wherein the first blade is formed from a first material and the second blade is formed from a second material that is different from the first material.

12. An elastomeric element for a wiper blade assembly having a spoiler and a wiper blade spline, the elastomeric element comprising:
a first blade having a first profile; and
a second blade having a second profile,
wherein the first blade is coupled to the second blade via a mating feature, and wherein the first blade is oriented away from the second blade.

13. The elastomeric element of claim 12, wherein the first profile and the second profile are different.

14. The elastomeric element of claim 12 or claim 13, wherein the first blade is formed from a first material and the second blade is formed from a second material that is different from the first material.

15. The elastomeric element of any one of claims 12 to 14, wherein the elastomeric element further comprises a third blade having a third profile, and wherein the first blade, the second blade, and the third blade are positioned 120 degrees about a longitudinal axis of the elastomeric element.
